(19) Europäisches Patentamt
European Patent Office
Office européen des brevets

(11) Publication number: **0 432 826 A1**

(12) # EUROPEAN PATENT APPLICATION

(21) Application number: **90203148.3**

(22) Date of filing: **29.11.90**

(51) Int. Cl.5 **C08G 65/48**, B01D 71 52

(30) Priority: **12.12.89 IT 2266489**

(43) Date of publication of application: **19.06.91 Bulletin 91/25**

(84) Designated Contracting States: **AT BE CH DE DK ES FR GB GR LI LU NL SE**

(71) Applicant: **SNAM S.p.A.**
**Corso Venezia 16**
**I-20121 Milan(IT)**

Applicant: **ENIRICERCHE S.p.A.**
**Corso Venezia 16**
**I-20121 Milan(IT)**

Applicant: **AGIP PETROLI S.p.A.**
**Via Laurentina 449**
**I-00142 Roma(IT)**

(72) Inventor: **Pedretti, Ugo**
**Via Pavoni 5**
**I-20159 Milan(IT)**
Inventor: **Gandini, Alberto**
**Via Bottesini 9**
**I-20131 Milan(IT)**
Inventor: **Roggero, Arnaldo**
**Via Libertà 72**
**I-20097 San Donato Milanese, Milan(IT)**
Inventor: **Sisto, Raffaello**
**Via Oderisi da Gubbio 182**
**I-00146 Rome(IT)**
Inventor: **Valentini, Claudio**
**Via Giolitti 101**
**I-00185 Rome(IT)**
Inventor: **Assogna; Amalia**
**V. le Parigi 37**
**I-00060 Riano, Rome(IT)**
Inventor: **Farias, Otello**
**Via Macedonia 33**
**I-00179 Rome(IT)**

(74) Representative: **Roggero, Sergio et al**
**Ing. Barzanò & Zanardo Milano S.p.A. Via Borgonuovo 10**
**I-20121 Milano(IT)**

(54) **Modified poly-(2,6-dimethyl-p-oxyphenylene), process for preparing it and its use in membranes for separating gas mixtures.**

(57) A modified, amorphous poly-(2,6-dimethyl-p-oxyphenylene) (PPO) having a glass transition temperature (Tg) comprised within the range of temperatures of from 170 to 220° C, contains in its macromolecule:

* units functionalized with ethyleneoxy-trialkyl-silyl moieties

EP 0 432 826 A1

$[-CH_2-CH_2-O-Si(R'R''R''')]$:

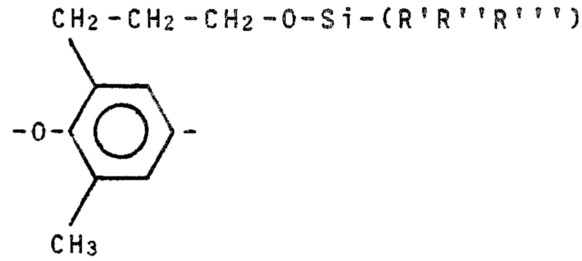

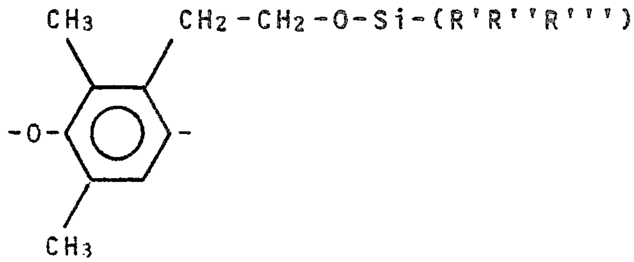

(A)

* units functionalized with trialkyl-silyl moieties

$[-Si(R'R''R''')]$:

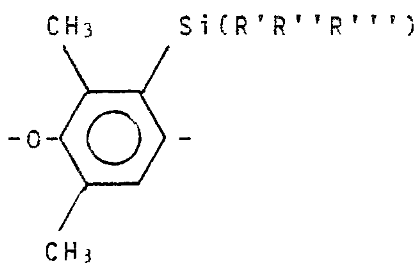

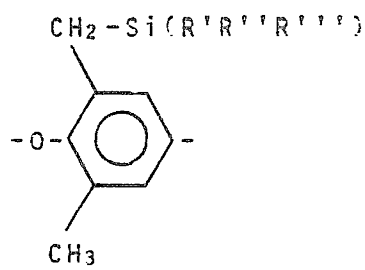

(B)

* units functionalized with hydroxy-ethylene moieties

$(-CH_2-CH_2-OH)$:

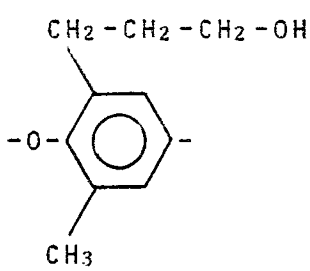

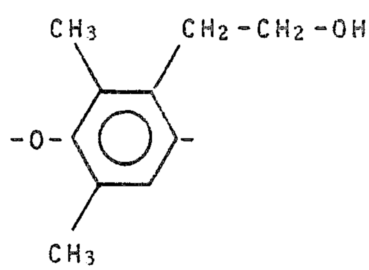

(C)

* together with unaltered 2,6-dimethyl-p-oxymethylene units:

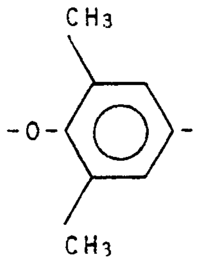

Such a modified PPO is prepared by metallating PPO with a metallating agent and causing such a metallated PPO to react with ethylene oxide and a trialkyl-silyl-halide in the stated sequence.

The use of modified PPO for the preparation of flat, also asymmetrical, membranes, useful in the processes of separation of gas mixtures, is disclosed.

## "MODIFIED POLY-(2,6-DIMETHYL-P-OXYPHENYLENE), PROCESS FOR PREPARING IT AND ITS USE IN MEMBRANES FOR SEPARATING GAS MIXTURES"

The present invention relates to a modified, amorphous poly-(2,6-dimetyl-p-oxyphenylene (PPO), to the process for preparing it and to its use in flat, also asymmetrical membranes useful for the separation of gas mixtures.

Gas-permeable, polymeric membranes for use in the process of separation of gas mixtures are known in the art. The polymers useful for the intended purpose can be selected from a wide range of materials including silicone rubber, natural rubber, butyl rubber, low-density polyethylene, polycarbonate, polysulfone, poly-(2,6-dimethyl-p-oxyphenylene), polystyrene and cellulose acetate, such as described, e.g. , by S.A. Stern, ACHEMA 1985, Plenary Lecture, and by H.B. Hopfenberg and V.T. Stannet in "Materials Science of Synthetic Membranes", ACS Symposium, Series N. 269, Chapter 2.

Among these materials, poly-(2,6-dimethyl-p-oxyphenylene) (called in short form "PPO" in the following) is endowed with.characteristics of good selectivity for gases, but shows a poor permeability to them. Furthermore, such a PPO is difficult to transform into membranes by the phase-reversal technique. Therefore, modified PPO polymers have been described in the art, which have been modified by the introduction of functional groups, and with one or more of their characteristics being improved.

So, e.g., U.S. 4,596,860 discloses a PPO bearing trialkyl-silyl groups. Said product is endowed with improved permeability characteristics.

European Pat.Appln.Publication N.0360318 discloses a PPO bearing hydroxyethylene groups, which can be easily transformed into asymmetrical membranes.

European Patent Application N.90201805.0 discloses a double-modified PPO containing both trialkyl-silyl and hydroxyethylene units. This product displays a good permeability for gases and can be easily transformed into membranes. This double-modified PPO is obtained by a process envisaging the initial metallation of PPO, followed by the reaction of metallated PPO, in sequence, with a halo-trialkyl-silane and ethylene oxide.

The present Applicant found now that when a metallated PPO is caused to react with ethylene oxide to yield a functionalized PPO containing metal-ethyleneoxy and the so functionalized PPO is contacted with a trialkyl-silyl-halide, the latter reacts with the metal of the metal-ethyleneoxy function, producing ethyleneoxy-trialkyl-silyl functional groups. The present Applicant found also that a PPO modified with said ethyleneoxy-trialkyl-silyl functional groups, additionally containing trialkyl-silyl and possibly also hydroxyethylene groups, constitutes a new material, which proved particularly useful for preparing membranes for the separation of gas mixtures, in particular gas mixtures containing oxygen and nitrogen.

In accordance with the above, in a first aspect thereof, the present invention relates to a modified, amorphous poly-(2,6-dimethyl-p-oxyphenylene) (PPO) having a glass transition temperature (Tg) comprised within the range of temperatures of from 170 to 220 °C, containing in its macromolecule:

* units functionalized with ethyleneoxy-trialkyl-silyl moieties

$[-CH_2-CH_2-O-Si(R'R''R''')]$:

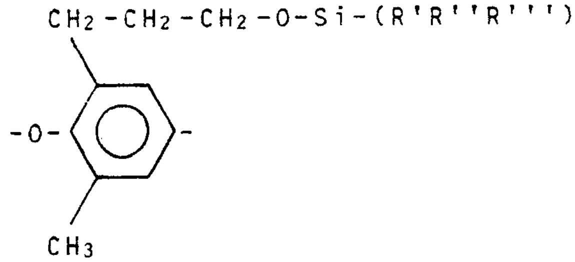

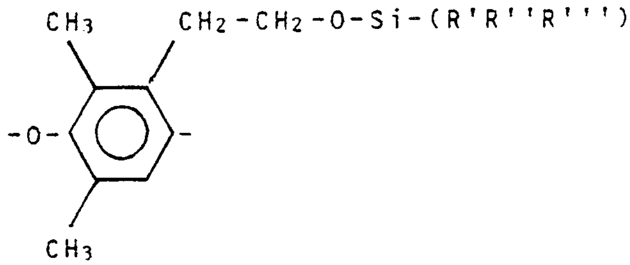

(A)

* units functionalized with trialkyl-silyl moieties

$[-Si(R'R''R''')]$:

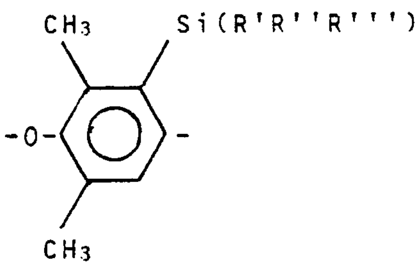

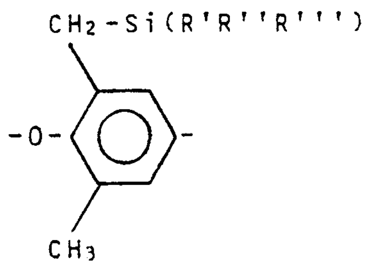

(B)

* units functionalized with hydroxy-ethylene moieties

$(-CH_2-CH_2-OH)$:

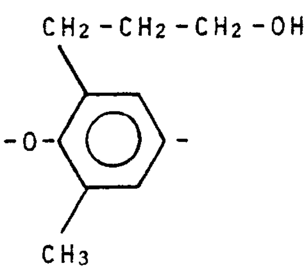

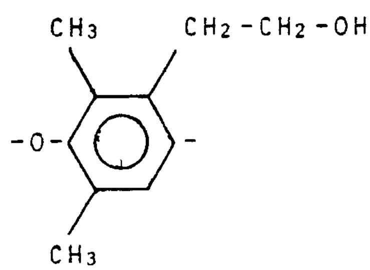

(C)

* together with unaltered 2,6-dimethyl-p-oxymethylene units:

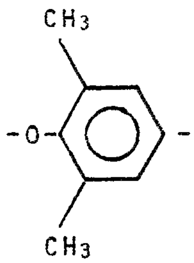

(D)

in which:

- R', R'' and R''' represent, independently from each other, an either linear or branched alkyl group of from 1 to 4 carbon atoms, and preferably the methyl group; and wherein:
- per each 100 total units, the number of (A) units can range from 5 to 40, the number of (B) units can range from 5 to 90, and the number of (C) units can range from 0 to 40.

In the preferred form of practical embodiment, the modified PPO according to the present invention has a glass transition temperature (Tg) comprised within the range of from 180 to 200 °C and contains, per each 100 total units, from 10 to 25 (A) units, from 25 to 50 (B) units and from 0.5 to 6 (C) units.

In general, the (A) units of the modified PPO according to the present invention, more than 50% and typically about 90% of ethyleneoxy-trialkyl-silyl groups are bonded to the methyl group. Furthermore, in the (B) units, more than 50% and typically about 90% of trialkyl-silyl groups are bonded to the benzene ring. Finally, in the (C) units the hydroxy-ethylene groups are nearly totally (99% or more) bonded to the methyl group and only little amounts of them are bonded to the benzene ring.

According to another aspect thereof, the present invention relates to a process for preparing a modified, amorphous PPO having the above reported features. Said process comprises the reaction of PPO with a metallating agent to produce a metallated PPO, followed by the reaction in sequence of said metallated PPO with ethylene oxide and with a trialkyl-silyl-halide.

The PPO which is submitted to the process according to the present invention is a well-known polymer, generally having a weight average molecular weight comprised within the range of from about 10,000 to about 80,000, with values of polydispersivity (i .e., the ratio of the weight average molecular weight to the number average molecular weight) comprised within the range of from about 1.4 to about 4.5. This polymer is obtained in the art by the oxidative polymerization of 2,6-xylenol, in the presence of a catalyst, preferably selected from among copper complex catalysts.

The metallation of such a PPO is carried out with the polymer being in solution in an inert organic solvent, generally selected from the group consisting of aliphatic, cycloaliphatic or aromatic liquid hydrocarbons (such as benzene or toluene), and of ethers (such as tetrahydrofuran).

The metallating agent useful for the intended purpose can be an alkali metal-alkyl, or an alkali-metal hydride or amide and preferably a ($C_1$-$C_{12}$)-alkyl-lithium, for instance n-butyl-lithium.

The step of metallation of PPO is normally carried out at a temperature comprised within the range of from -30 °C to 80 °C, during a time of from 1 minute to 4 hours, with a ratio of the moles of the metallating agent to the monomer units (2,6-dimethyl-p-oxy-phenylene) contained in PPO which depends on the desired extent of metallation, also considering the metallation yield. The molar ratio of the metallating agent to 2,6-dimethyl-p-oxyphenylene units is generally comprised within the range of from 0.5:1 to 1:1.

The metallation of PPO is preferably carried out at room temperature (20-25 °C) for a time of 15-30 minutes. The metallation can be furthermore carried out in the presence of an activator, normally selected from among tetramethyl-ethylene-diamine, potassium tert.-butoxide, and diaza-bicyclo-octane. When the activator is used, useful values of the molar ratio of the metallating agent to the activator are comprised within the range of from 1:0.5 to 1:1.

The metallated PPO obtained in that way is reacted with ethylene oxide by operating with a ratio of the moles of ethylene oxide to the metallated sites of the polymer comprised within the range of from 0.1:1 to 0.4:1, and preferably of the order to 0.2:1. Furthermore, the reaction is advantageously carried out at temperature comprised within the range of from -30 °C to 80 °C, during a time of from 0.5 to 30 minutes. In the preferred form of practical embodiment, the reaction is carried out at room temperature (20-25 °C), with a reaction time of the order of 1-5 minutes.

To the so obtained reaction mixture, a trialkyl-silyl-halide , , preferably a trialkyl-silyl-chloride , is added, with a ratio of the moles of halo-trialkyl-silane to the metallated sites initially introduced into the PPO comprised within the range of from 0.9:1 to 0.6:1, and preferably of the order of 0.8:1. In particular, this reaction is carried out at a temperature comprised within the range of from 10 °C to 80 °C, during a time of

from 30 minutes to 4 hours. The reaction is preferably carried out at room temperature (20-25° C), during a reaction time of the order of 2 hours.

In that way, the modified PPO according to the present invention is obtained. Said product is separated from the reaction medium by the normal techniques, and is optionally submitted to purification treatments.

Such a modified PPO is an amorphous solid product with a glass transition temperature (Tg) comprised within the range of from 170 to 220° C and normally of from 180 to 200° C (determination by DSC), which contains unchanged monomer units together with modified monomer units according to as indicated hereinabove. The presence of these units is confirmed by nuclear magnetic resonance (N.M.R. ) analysis.

According to a further aspect thereof, the present invention relates to an either homogeneus or asymmetrical flat membrane, obtained by starting from the above disclosed modified PPO. In particular, such a modified PPO can be transformed into a flat homogeneous membrane by the usual techniques based on the dissolution of the polymer in a suitable solvent (e.g., chloroform) and the deposition of the solution as a thin film on a support. After the controlled evaporation of the solvent, flat, dense and homogeneous membranes of modified PPO are recovered. The thickness of such membranes is generally comprised within the range of from 1 to 120 micrometres and preferably is of the order of 1-50 micrometres; the membranes are permeable to gases and selective in the separation of gas mixtures.

In the preferred form of practical embodiment, the modified PPO of the instant invention is transformed into a flat, asymmetrical membrane by the phase-reversal technique, using water as the coagulating medium. More particularly, according to said technique, the modified PPO is dissolved in a solvent, such as dimethylacetamide, dioxane, N-methylpyrrolidone, tetramethyl-urea, formyl-morpholine and formyl-pyridine, forming a solution containing from 5 to 30% by weight of polymer. The so obtained solution is spread as a film on a suitable support, such as, e.g., a glass sheet. The coated support is then put into contact with an aqueous coagulating bath, so as to cause the phase reversal to occur and a flat, asymmetrical membrane to be formed.

Such a membrane is formed by a dense and active "skin" having a thickness of the order of from 0.1 to 10 micrometres, and a macroporous support layer of from 50 to 120 micrometres of thickness.

The asymmetrical membranes of the present invention are highly permeable and selective in the processes of separation of gas mixtures containing, e.g., methane, carbon dioxide, oxygen, nitrogen, hydrogen and hydrogen sulfide. These membranes are particularly useful in the processes of oxygen/nitrogen separation in which they combine high permeability and good selectivity values.

The following experimental examples are reported to illustrate the present invention in greater detail.

Examples 1-9

60 g of PPO (0.5 mol, with reference to the monomer units of 2,6-dimethyl-p-oxyphenylene present in PPO) is charged to a reactor of 3 litres of capacity, equipped with mechanical stirrer, charging funnel, thermometer and dipping tube. Through said reactor a nitrogen stream is flown. The PPO inside the reactor is then dissolved in 1 .5 litres of tetrahydrofuran (THF), by operating at room temperature (20-25° C) . The PPO used for this test shows the following characteristics: weight average molecular weight 42,200 g/mol; ratio of the weight average molecular weight to the number average molecular weight (Mw/Mn) 2.5; intrinsic viscosity (at 25° C, in chloroform) 0.54 dl/g; and glass transition temperature (Tg) 221° C.

Amounts of n-butyl-lithium (LiR) variable as a function of the desired metallation degree (from 0.25 to 0.5 mol) are added to the so obtained solution, and the reaction is allowed to proceed for reaction times ranging from 15 to 30 minutes. PPO is functionalized by adding and causing to react, in sequence, ethylene oxide (EO) and chloro-trimethyl-silane (TMS). A suspension of functionalized PPO is thus obtained, which is treated with a methanol/water mixture. The functionalized PPO is separated and dried at 70° C in a vacuum oven, until constant weight is reached.

In following Table I, the conditions of PPO metallation and functionalization are reported. In particular, the metallation is carried out at the temperature of 25° C for a 15-minute time, except for Examples 8 and 9, in which the metallation time is of 30 minutes. In Table I, by the terms "Functionalizing agent (type) and (mol %)" the moles of EO and TMS fed per each 100 moles of initially charged n-butyl-lithium are meant.

Table I

| Example N. | LiR (mol %) | LiR/PPO (mol)* | Functionalizing agent (type) | Functionalizing agent (mol %) | Temp. (deg C) | Time (minutes) |
|---|---|---|---|---|---|---|
| 1 | 100 | 1.0 | EO | 15 | 25 | 1 |
| | | | TMS | 85 | 25 | 60 |
| 2 | 100 | 1.0 | EO | 15 | 25 | 5 |
| | | | TMS | 85 | 25 | 120 |
| 3 | 100 | 1.0 | EO | 15 | 25 | 5 |
| | | | TMS | 85 | 25 | 120 |
| 4 | 100 | 1.0 | EO | 20 | 25 | 1 |
| | | | TMS | 80 | 25 | 120 |
| 5 | 70 | 0.7 | EO | 20 | 25 | 5 |
| | | | TMS | 80 | 25 | 120 |
| 6 | 100 | 1.0 | EO | 20 | 25 | 5 |
| | | | TMS | 80 | 25 | 120 |
| 7 | 70 | 0.7 | EO | 20 | 25 | 5 |
| | | | TMS | 80 | 25 | 120 |
| 8 | 100 | 1.0 | EO | 20 | 25 | 5 |
| | | | TMS | 80 | 25 | 120 |
| 9 | 100 | 1.0 | EO | 20 | 25 | 5 |
| | | | TMS | 80 | 25 | 120 |

(* = ratio of the moles of LiR to the number of 2,6-dimethyl-p-oxyphenylene monomer units present in PPO)

In following Table II, the characteristics of functionalized PPO are reported, as determined by $^1$H-N.M.R. spectrum on the basis of the signals to be attributed to the protons on the different structures present in the polymer, deriving from the introduced functional groups. In this table, the functional groups bonded to PPO are reported:

* (C) hydroxy-ethylene : $-CH_2-CH_2-OH$
* (A) ethyleneoxy-trimethyl-silyl: $-CH_2-CH_2-O-Si(CH_3)_3$
* (B) trimethyl-silyl : $-Si(CH_3)_3$

Furthermore in Table II, under the headings "Methyl (mol %)" and "Ring (mol %)", the numbers of functional groups respectively bonded to PPO's methyl groups and benzene rings per each 100 monomer units of PPO, are reported. Finally, in the same Table, under the headings "OH Yield (mol %)" and "Si $(CH_3)_3$ Yield (mol %)" the % yields of functionalization with EO and TMS, relatively to the charged moles of

functionalizing agents, are respectively reported.

Table II

| Example N. | Function | Methyl (mol %) | Ring (mol %) | Total (mol %) | OH Yield (mol %) | $Si(CH_3)_3$ Yield (mol %) | Tg (deg C) |
|---|---|---|---|---|---|---|---|
| 1 | (C) | 0.2 | 0 | 0.2 | | | |
| | (A) | 15.7 | 1.7 | 17.4 | | | |
| | (B) | 3.4 | 32.8 | 36.2 | 100 | 63.0 | 181 |
| 2 | (C) | 0.5 | 0 | 0.5 | | | |
| | (A) | 15.1 | 0 | 15.1 | | | |
| | (B) | 4.9 | 32.2 | 37.1 | 100 | 61.4 | 182 |
| 3 | (C) | 0 | 0 | 0 | | | |
| | (A) | 13.9 | 2.8 | 16.7 | | | |
| | (B) | 11.2 | 39.4 | 50.6 | 100 | 79.0 | 188 |
| 4 | (C) | 0 | 0 | 0 | | | |
| | (A) | 14.4 | 0 | 14.4 | | | |
| | (B) | 11.8 | 36.9 | 48.7 | 72 | 78.8 | 191 |
| 5 | (C) | 5.2 | 0 | 5.2 | | | |
| | (A) | 10.5 | 0 | 10.5 | | | |
| | (B) | 6.7 | 31.3 | 38.1 | 100 | 86.7 | 190 |
| 6 | (C) | 1.1 | 0 | 1.1 | | | |
| | (A) | 18.2 | 1.1 | 19.3 | | | |
| | (B) | 5.7 | 34.1 | 39.8 | 100 | 73.8 | 180 |

Table II (continuation)

| Example N. | Function | Methyl (mol %) | Ring (mol %) | Total (mol %) | OH Yield (mol %) | $Si(CH_3)_3$ Yield (mol %) | Tg (deg C) |
|---|---|---|---|---|---|---|---|
| 7 | (C) | 1.5 | 0 | 1.5 | | | |
| | (A) | 14.4 | 0 | 14.4 | | | |
| | (B) | 7.1 | 28.9 | 36.0 | 100 | 72.0 | 185 |
| 8 | (C) | 5.6 | 0 | 5.6 | | | |
| | (A) | 15.6 | 0 | 15.6 | | | |
| | (B) | 8.4 | 32.8 | 41.2 | 100 | 71.0 | 200 |
| 9 | (C) | 2.0 | 0 | 2.0 | | | |
| | (A) | 14.1 | 0 | 14.1 | | | |
| | (B) | 7.1 | 27.8 | 34.9 | 80 | 61.0 | 180 |

Example 10

One gram of functionalized PPO obtained as disclosed in each of the above Examples 1-9 is dissolved in 5 ml of chloroform, by operating at room temperature. After been kept standing for about 15 minutes, the solution is spread on a glass sheet by the Gardner's blade device (Pacific Scientific Gardner/Neotec Instrument Division). The air gap is of 15 mils and the application is carried out according to ASTM D-823-53 (1970) and according to D-823 procedure to prepare the test membrane.

The glass sheet is then placed under a glass bell whose atmosphere is saturated with chloroform vapours, at room temperature, inside which most solvent is removed. Solvent removal is continued by evaporating the solvent from the sheet kept in the open air, under a hood equipped with air-suction means, for a further 15 minutes. The removal of the solvent is then completed by keeping the sheet 2 hours under vacuum (12-16 $mm_{Hg}$) at 80-100 °C. The membrane is separated from the glass sheet by dipping said glass sheet in water. The membrane is then dried between two sheets of filter paper and is dried in a vacuum oven. From the film, a circular portion of 11 cm of diameter is cut, to be submitted to the test for permeability.

In Table III, the coefficients of permeability of the polymeric films for carbon dioxide, methane, oxygen and nitrogen are reported. The values of these coefficients are obtained by testing the polymeric films for their permeability by the LYSSY GPM 200 permeameter. The measurement is carried out at the temperature of 35 °C and with a difference of partial pressure of permeant gas 2 of 76 cm $_{Hg}$ ( unit of measure: $10^{-10}$.cc STP . cm / $cm^2$ . sec . $cm_{Hg}$).

In Table III, also the selectivity values, expressed as the ratios:

* Alpha 1 = $P(CO_2)/p(CH_4)$, and

* Alpha 2 = $p(O_2)/p(N_2)$

are reported.

Table III

| Membrane | $P(CO_2)$ | $P(CH_4)$ | $P(O_2)$ | $P(N_2)$ | Alpha 1 | Alpha 2 |
|---|---|---|---|---|---|---|
| | ($10^{-10}$.ccSTP.cm/$cm^2$.sec.cm Hg) | | | | | |
| Example 1 | 208.2 | 27.6 | 51.0 | 14.2 | 7.5 | 3.6 |
| Example 2 | 186.0 | 23.5 | 48.4 | 14.4 | 7.9 | 3.4 |
| Example 3 | 236.0 | 27.7 | 56.7 | 16.1 | 8.5 | 3.5 |
| Example 4 | 217.0 | 27.7 | 58.1 | 15.2 | 7.8 | 3.8 |
| Example 5 | 186.0 | 19.4 | 41.7 | 9.7 | 9.6 | 4.3 |
| Example 6 | 202.0 | 23.6 | 45.6 | 12.4 | 8.6 | 3.7 |
| Example 7 | 177.0 | 17.8 | 39.2 | 10.0 | 9.9 | 3.9 |
| Example 8 | 162.0 | 16.9 | 32.7 | 8.2 | 9.5 | 4.0 |
| Example 9 | 170.0 | 19.2 | 37.6 | 10.3 | 8.9 | 3.7 |

Example 11

Three grams of modified PPO obtained in Example 3 is dissolved in 7 g of formyl-piperidine (resulting concentration = 30% weight/weight). The solution is left standing 4 hours at 40 °C to allow any possibly present air bubbles to escape. The solution is then brought to 60 °C and is applied as a layer to a glass sheet by using a CAMAG blade spreader with a fixed free air gap of 300 micrometres. The asymmetrical membrane is prepared by slowly and continuously sliding the glass sheet under the spreader in such a way, as to obtain a complete and uniform distribution of the solution. After a delay time comprised within the range of from 2 to 5 minutes, the sheet is charged to the coagulation bath constituted by bidistilled water at room temperature, inside which the phase reversal and consequently the formation of the asymmetrical membrane is attained. The membrane, once formed, is left inside the bath for a time of about 3 hours. It is then washed with bidistilled water and finally is dried at 30 °C.

A portion of approximately 3 x 3 cm of size of the asymmetrical membrane is bonded between 2 aluminum foils of 11 x 11 cm of size. At the centre of each foil a bore of 1 .6 cm of diameter was previously made, so a free through opening of 2 $cm^2$ of surface area is left for gas passage.

The so obtained specimen is mounted inside the LYSSY GPM 200 permeameter and is used to measure the permeance (gas flow rate/pressure unit) for carbon dioxide, methane, oxygen and nitrogen at the temperature of 35 °C and under a permeant gas pressure of 76 $cm_{Hg}$. The thickness of the layer active in gas separation (skin) can be computed, for each gas, as the ratio of the coefficient of permeability of modified PPO, measured on a dense and homogeneous film, to the permeance of the asymmetrical membrane showing the same selectivity as of its precursor polymer. The permeance values measured on membranes of 102 micrometres of apparent thickness are the following:

| | | |
|---|---|---|
| * $P(CO_2)$ | : | 605.0 $10^{-6}$ ccSTP.cm /$cm^2$.sec.$cm_{Hg}$ |
| * $P(CH_4)$ | : | 120.4 $10^{-6}$ ccSTP.cm /$cm^2$.sec.$cm_{Hg}$ |
| * $P(O_2)$ | : | 213.0 $10^{-6}$ ccSTP.cm /$cm^2$.sec.$cm_{Hg}$ |
| * $P(N_2)$ | : | 71.4 $10^{-6}$ ccSTP.cm /$cm^2$.sec.$cm_{Hg}$ |
| * $P(CO_2)/P(CH_4)$ | : | 5.0 |
| * $P(O_2)/P(N_2)$ | : | 3.0 |

Example 12

The procedure is the same as of Example 11, with the modified PPO of Example 5 being used. The permeance values measured on membranes of 107 micrometres of apparent thickness are the following:

| | | |
|---|---|---|
| * $P(CO_2)$ | : | 388.0 $10^{-6}$ ccSTP.cm /$cm^2$.sec.$cm_{Hg}$ |
| * $P(CH_4)$ | : | 66.5 $10^{-6}$ ccSTP.cm /$cm^2$.sec.$cm_{Hg}$ |
| * $P(O_2)$ | : | 128.7 $10^{-6}$ ccSTP.cm /$cm^2$.sec.$cm_{Hg}$ |
| * $P(N_2)$ | : | 49.1 $10^{-6}$ ccSTP.cm /$cm^2$.sec.$cm_{Hg}$ |
| * $P(CO_2)/P(CH_4)$ | : | 5.8 |
| * $P(O_2)/P(N_2)$ | : | 2.6 |

## Claims

1. Modified, amorphous poly-(2,6-dimethyl-p-oxyphenylene) (PPO) having a glass transition temperature

(Tg) comprised within the range of temperatures of from 170 to 220 °C, containing in its macromolecule:

* units functionalized with ethyleneoxy-trialkyl-silyl moieties

$$[-CH_2-CH_2-O-Si(R'R''R''')]:$$

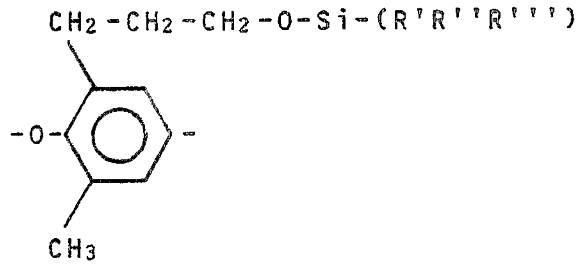

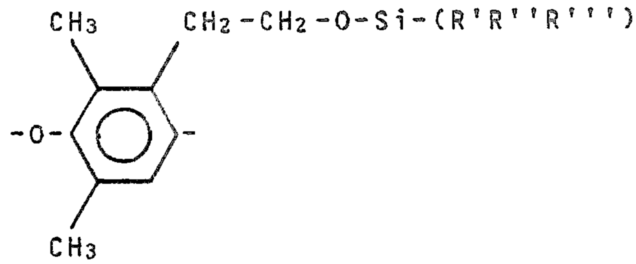

(A)

* units functionalized with trialkyl-silyl moieties

$$[-Si(R'R''R''')]:$$

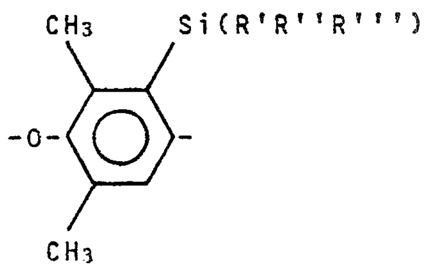

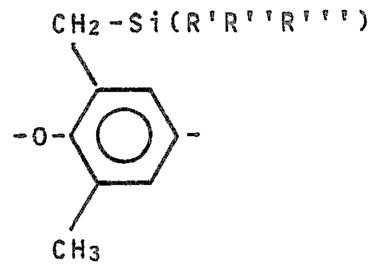

(B)

* units functionalized with hydroxy-ethylene moieties

$$(-CH_2-CH_2-OH):$$

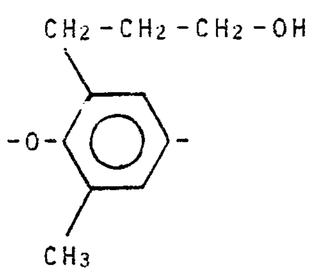

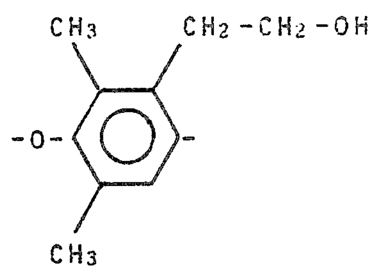

(C)

* together with unaltered 2,6-dimethyl-p-oxymethylene units:

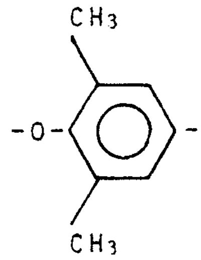

(D)

in which:

- R', R" and R"' represent, independently from each other, an either linear or branched alkyl group of from 1 to 4 carbon atoms, and preferably the methyl group; and wherein:
- per each 100 total units, the number of (A) units can range from 5 to 40, the number of (B) units can range from 5 to 90, and the number of (C) units can range from 0 to 40.

**2.** Modified PPO according to claim 1, characterized in that it has a glass transition temperature (Tg) comprised within the range of from 180 to 200 °C and contains, per each 100 total units, from 10 to 25 (A) units, from 25 to 50 (B) units and from 0.5 to 6 (C) units.

**3.** Modified PPO according to claim 1, characterized in that in the (A) units, more than 50% and typically about 90% of ethyleneoxy-trialkyl-silyl groups are bonded to the methyl group, in the (B) units, more than 50% and typically about 90% of trialkyl-silyl groups are bonded to the benzene ring, and in the (C) units the hydroxyethylene groups are nearly totally (99% or more) bonded to the methyl group.

**4.** Process for preparing a modified PPO according to claim 1, characterized in that is comprises the reaction of PPO with a metallating agent to produce a metallated PPO, followed by the reaction in sequence of said metallated PPO with ethylene oxide and with a trialkyl-silyl-halide.

**5.** Flat, homogeneous membrane for the separation of gas mixtures, obtained from modified PPO according to claims from 1 to 3.

**6.** Flat, asymmetrical membrane for the separation of gas mixtures, obtained from modified PPO according to claims from 1 to 3.

European Patent Office

# EUROPEAN SEARCH REPORT

Application Number

**EP 90 20 3148**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 417 053 (A.J. CHALK)<br>* Claims *<br>– – – | 1 | C 08 G 65/48<br>B 01 D 71/52 |
| A | US-A-3 402 144 (A.S. HAY)<br>* Claims; examples *<br>– – – – – | 1 | |

| TECHNICAL FIELDS SEARCHED (Int. Cl.5) |
|---|
| C 08 G |

The present search report has been drawn up for all claims

| Place of search | Date of completion of search | Examiner |
|---|---|---|
| The Hague | 12 March 91 | DERAEDT G. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document